# EUROPEAN PATENT APPLICATION

(11) **EP 2 778 380 A2**
(43) Date of publication of application: **17.09.2014**
(21) Application number: 14158966.3
(22) Date of filing: 11.03.2014
(51) Int. Cl.: F02K 1/48

(54) **Gas turbine engine exhaust mixer with aerodynamic struts**

(30) Priority: 12.03.2013 US 201313795520
(71) Applicant: PRATT & WHITNEY CANADA CORP., Longueuil, Quebec J4G 1A1 (CA)
(72) Inventor: Bourchard, Richard, Longueuil, Québec J4G 1A1 (CA); Cunnhingham, Mark Huzzard, Longueuil, Québec J4G 1A1 (CA)
(74) Representative: Leckey, David Herbert

(57) **Abstract**

An exhaust mixer (32) for a gas turbine engine has a plurality of circumferentially distributed alternating inner and outer lobes (42,44), and a plurality of aerodynamic struts (50) positioned and oriented between adjacent inner lobes (42) in the core flow passage. The struts (50) are configured for diverting a portion of the core flow radially outwardly in troughs formed by the outer lobes (44) on the core flow side of the mixer (32).

## Description

### TECHNICAL FIELD

The application relates generally to aircraft gas turbine engines and, more particularly, to an exhaust mixer for bypass gas turbine engines.

### BACKGROUND OF THE ART

Multi-lobe exhaust mixers are subject to vibrations and lobe deflections due to the pressure and temperature differences between the high velocity, high temperature core flow and the low velocity, low temperature air bypass flow. Support structures are often provided at the free downstream end of the multi-lobe mixers in an effort to stabilize the lobes. However, conventional support structures generally have a negative impact on the engine aerodynamic performances and provide a weight penalty.

### SUMMARY

In one general aspect, there is provided an exhaust mixer for a gas turbine engine of the type having an annular core flow passage for channelling a high temperature core flow along an axis of the engine, and a bypass passage extending concentrically about the core flow passage for axially channelling bypass air; the exhaust mixer comprising: an annular wall concentrically disposed relative to the axis of the engine and extending axially between an upstream end and a downstream end, the annular wall defining a plurality of circumferentially distributed alternating inner and outer lobes, the outer lobes protruding radially outwardly into the bypass passage and the inner lobes protruding radially inwardly into the core flow passage, and a plurality of struts extending between circumferentially adjacent inner lobes in the core flow passage at an axial location upstream from the downstream end of the mixer, the struts being disposed radially outwardly relative to a tip of said inner lobes, each of the struts having a flow surface extending from a leading edge to a trailing edge, the flow surface diverging radially outwardly from the axis of the engine in a downstream direction.

In another aspect, there is provided an exhaust mixer for a gas turbine engine of the type having an annular core flow passage for channelling a core flow along an axis of the engine, and a bypass passage extending concentrically about the core flow passage for axially channelling bypass air; the exhaust mixer comprising: an annular wall concentrically disposed relative to the axis of the engine and extending axially between an upstream end and a downstream end, the annular wall defining a plurality of circumferentially distributed alternating inner and outer lobes, the outer lobes protruding radially outwardly into the bypass passage and the inner lobes protruding radially inwardly into the core flow passage, the outer lobes forming radially outwardly extending troughs between circumferentially adjacent inner lobes in the core flow passage, and at least one circumferential array of vanes, each of the troughs having at least one of said vanes disposed therein and interconnecting circumferentially adjacent inner lobes at an axial location upstream from the downstream end of the mixer, each of the vanes being configured to divert a portion of the core flow radially outwardly in the troughs between adjacent inner lobes.

### DESCRIPTION OF THE DRAWINGS

Reference is now made to the accompanying figures, in which:
Fig. 1 is a schematic cross-sectional view of a turbofan gas turbine engine having an exhaust mixer;
Fig. 2 is a front isometric view of the exhaust mixer;
Fig. 3 is an enlarged rear isometric view of the exhaust mixer illustrating the positioning of aerodynamic struts between adjacent inner lobes on the core side flow of the mixer;
Fig. 4 is a cross-section view of a portion of the exhaust mixer illustrating the axial and angular positioning of the aerodynamic struts on the core flow side of the mixer; and
Fig. 5 is a rear end view of the exhaust mixer illustrating the radial position of the aerodynamic struts in the troughs defined by the outer lobes on the core flow side of the mixer.

### DETAILED DESCRIPTION

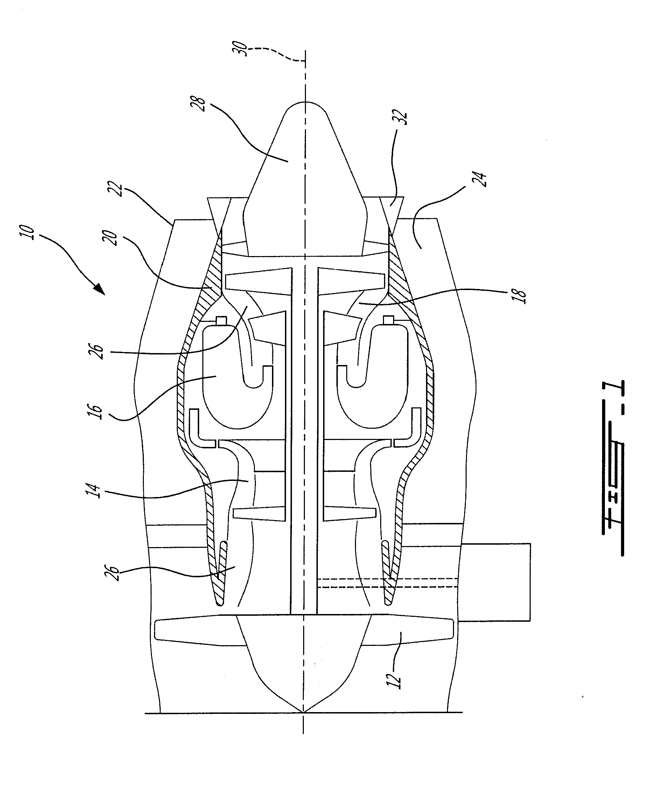

Fig. 1 illustrates a turbofan gas turbine engine 10 of a type preferably provided for use in subsonic flight, generally comprising in serial flow communication a fan 12 through which ambient air is propelled, a multistage compressor 14 for pressurizing the air, a combustor 16 in which the compressed air is mixed with fuel and ignited for generating an annular stream of hot combustion gases, and a turbine section 18 for extracting energy from the combustion gases.

The gas turbine engine 10 includes a first casing 20 which encloses the turbo machinery of the engine, and a second, outer casing 22 extending outwardly of the first casing 20 such as to define an annular bypass passage 24 therebetween. The air propelled by the fan 12 is split into a first portion which flows around the first casing 20 within the bypass passage 24, and a second portion which flows through a core flow path 26 which is defined within the first casing 20 and allows the flow to circulate through the multistage compressor 14, combustor 16 and turbine section 18 as described above.

At the aft end of the engine 10, an axisymmetrical bullet 28 is centered on a longitudinal axis 30 of the engine 10 and defines an inner wall of the core flow path 26 so that the combustion gases flow therearound. An annular exhaust mixer 32 surrounds at least a portion of the bullet 28, the mixer 32 acting as a rearmost portion of the outer wall defining the core flow path 26 and a rearmost portion of the inner wall defining the bypass passage 24. The hot combustion gases from the core flow path 26 and the cooler air from the bypass passage 24 are thus mixed together by the mixer 32 at the exit thereof such as to produce an exhaust with a reduced temperature.

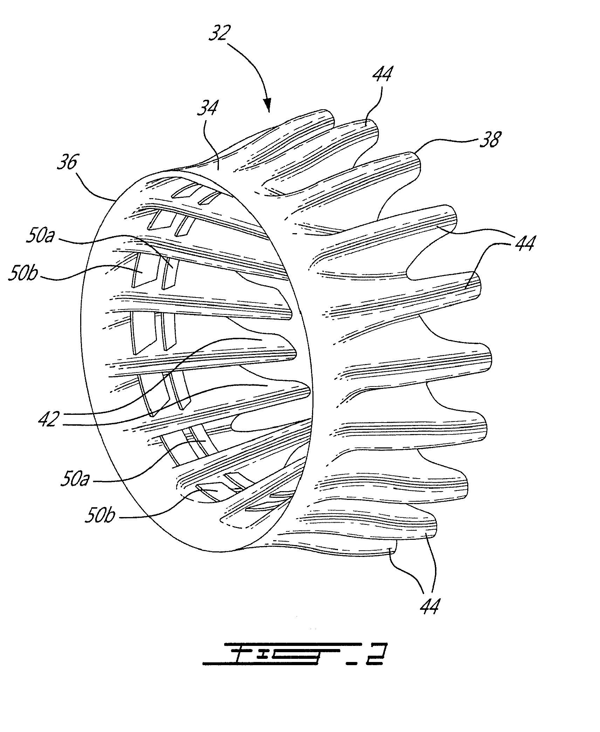

Referring to Fig. 2, the mixer 32 includes an annular sheet metal wall 34 defining an upstream end 36 of the mixer 32 along which the flows from the core flow path 26 and from the bypass passage 24 are received, and a downstream end 38 where the two flows meet and are mixed together. The annular wall 34 defines a plurality of circumferentially distributed lobes. The lobes include alternating inner and outer lobes 42, 44, with the outer lobes 44 extending radially outwardly into the bypass passage 24 and the inner lobes 42 extending radially inwardly into the core flow path 26. As such, the inner lobes 42 define troughs in the bypass passage 24 in between adjacent ones of the outer lobes 44, while the outer lobes 44 define troughs in the core flow path 26 in between adjacent ones of the inner lobes 42. In the embodiment shown, each lobe 42, 44 has a radially elongated cross-section including a rounded tip or crest 48.

In operation, exhaust mixers are subject to vibrations and lobe deflections. Deflections created by mixer resonances and pressure loading (pressure delta between core and bypass flows) are of concern for three reasons. First, the resulting vibration stresses created in the mixer supporting structure and adjacent hardware may create durability problems. Second, the vibrations can become the source of unacceptable noise. Third, the mixer geometry shift can change the flow area both on the core and bypass flows which will have an impact on the engine performance. From an aerodynamic point of view, it has also been observed that the core flow tends to flow straight through a central region of the exhaust mixer with no or only a small portion of the core flow passing in the radially outer portion of the troughs between adjacent inner lobes 42. In other words, the core flow tends to occupy only a central portion of the total volume of the exhaust mixer on the core flow side. A better diffusion of the core flow in the exhaust mixer (i.e. a greater lobe penetration of the core flow) is desirable in order to promote better mixing of the flows. Increasing the diffusion of the core flow in the mixer allows reducing the velocity of the core flow. By reducing the difference in flow velocity between the low velocity bypass air flow and the high velocity core flow, fewer vortexes may be generated at the flow mixing plane, thereby resulting in reduced gas exhaust noise levels.

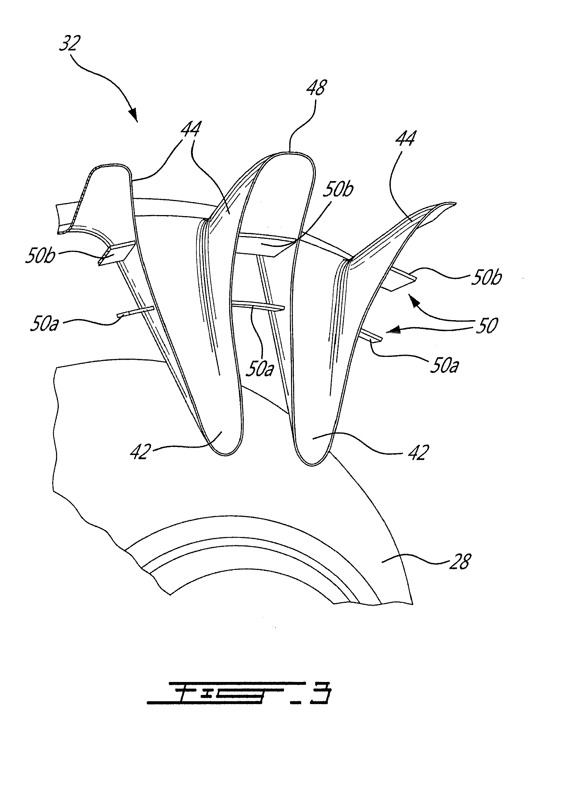

As best shown in Figs. 3 to 5, stiffening aerodynamic struts 50 may be strategically positioned and oriented on the core flow side of the mixer (i.e. the radially inwardly facing side of the mixer) to both improve core flow penetration in the troughs formed by the outer lobes 44 and reduce lobe wall deflections and vibrations. The struts 50 if properly positioned and configured may thus have structural and aerodynamic functions. The combination of these two functions in one structure contributes to minimize the overall weight of the mixer. Also, by reducing the pressure delta between the two flows in the mixer, lobe deflections may be reduced.

One or more struts 50 (two in the illustrated example) extend across each trough between circumferentially adjacent inner lobes 42. The struts provide added rigidity, thereby reducing mixer deflection amplitude. Since most of the mixer deflections generally translate in a squeezing motion of the lobes (similar to an accordion or a bellow type structure) the presence of the struts 50 between adjacent inner lobes 42 can effectively constrain the overall structure.

The struts 50 may be distributed on concentric circles around the central axis of the mixer. In the embodiment shown in Figs. 3 to 5, first and second sets of struts 50a and 50b are used. As will be seen herein after, the struts 50a, 50b act as vanes to provide different depths of core flow penetration in the troughs between the inner lobes 42.

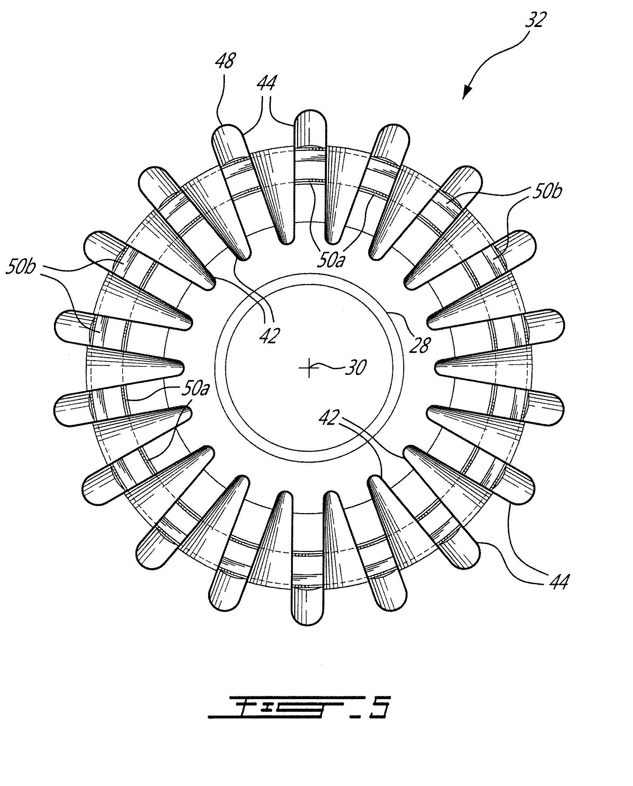

As best shown in Fig. 5, the struts 50a, 50b may be generally positioned in the radially outer half of the troughs in order to help the core flow to reach the outer tips 48 of the troughs defined by the outer lobes 44 on the core flow side of the mixer 32. It is understood, that the struts 50a, 50b could be radially positioned at various depths in each trough between adjacent inner lobes 42 to provide different levels of flow penetration.

A lot of mixing activity takes place at the outer tip 48 of the outer lobes 44. Since the locally diverging core flow does not tend to reach that area easily proper placement of the struts 50a, 50b in the core flow side troughs can help guide the core flow deeper into the troughs and cause the core flow to flow over the radially inner surface of the radially outer tip portion of troughs where significant mixing activity occurs.

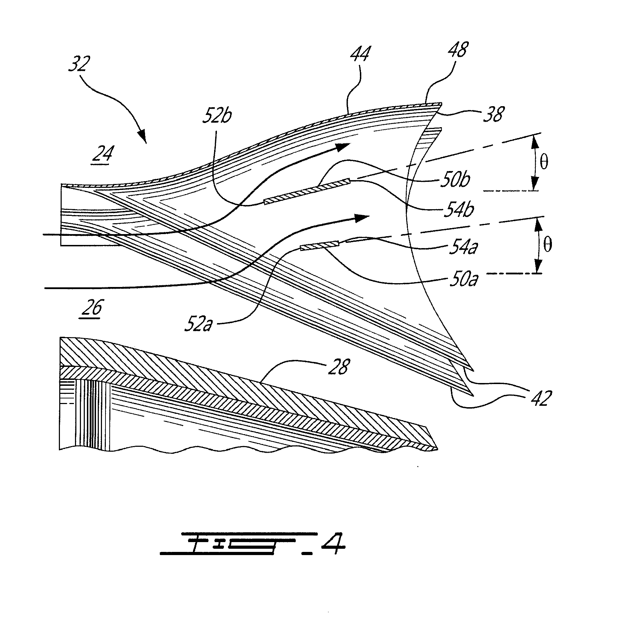

Referring to Fig. 4, it can be seen that the struts 50a, 50b are angled relative to the axis of the mixer (i.e. the axis 30 of the engine). The respective angles of the struts are selected to effectively divert the incoming core flow in a radially outer direction (i.e. deepwise into the troughs between the inner lobes 42). The orientation of the struts 50a, 50b is selected to give better lobe penetration. As can be appreciated from Fig. 4, each strut 50a, 50b may be provided in the form of a flat sheet metal member having opposed flow surfaces extending along a straight line between a leading edge 52a, 52b and a trailing edge 54a, 54b. Each strut 50a, 50b is angled so that its trailing edge 54a, 54b is disposed radially outwardly relative to its leading edge 52a, 52b. In other words, the struts 50a, 50b gradually diverge radially outwardly from the central axis of the mixer 32 in the downstream direction. Each strut 50a, 50b is oriented at an angle θ relative to the axis of the mixer 32. According to one example, the angle θ is set at about 14 degrees for struts 50b and at about 7 degrees for struts 50a. However, it is understood that the radially inner and the radially outer struts 50a, 50b may be set at various angles to direct the flow radially outwardly; different angles providing different levels of lobe penetrations.

Still referring to Fig. 4, it can be appreciated that the struts 50a, 50b are positioned axially upstream of the downstream end 38 of the mixer 32. As depicted by the flow arrows in Fig. 4, the axial position of the struts 50a, 50b is selected together with the angular orientation thereof to redirect a portion of the core flow radially outwardly in the troughs before the core flow be discharged from the downstream end 38 of the mixer 32. According to one example, the downstream end of the struts is spaced axially forwardly relative to the trailing edge of the mixer.

From Fig. 4, it can also be observed that, according to one possible example, the set of radially outer struts 50b extend axially upstream of the radially inner struts 50a. The trailing edges 54a, 54b of the radially inner and radially outer struts 50a, 50b may be generally axially aligned. However, in the illustrated embodiment, the trailing edges 54b of the struts 50b project downstream of the trailing edges 54a of struts 50a.

The above description is meant to be exemplary only, and one skilled in the art will recognize that changes may be made to the embodiments described without departing from the scope of the invention disclosed. Alternate embodiments which are not shown include embodiment(s) where the struts have an airfoil shape; embodiment(s) where vanes are used as lobe penetration aids instead of stiffening struts; and embodiments including two or more of these characteristics. Still other modifications which fall within the scope of the present invention will be apparent to those skilled in the art, in light of a review of this disclosure, and such modifications are intended to fall within the appended claims.

## Claims

1. An exhaust mixer (32) for a gas turbine engine (10) of the type having an annular core flow passage (26) for channelling a high temperature core flow along an axis (30) of the engine (10), and a bypass passage (24) extending concentrically about the core flow passage (26) for axially channelling bypass air; the exhaust mixer (32) comprising: an annular wall (34) concentrically disposed relative to the axis (30) of the engine (10) and extending axially between an upstream end (36) and a downstream end (38), the annular wall (34) defining a plurality of circumferentially distributed alternating inner and outer lobes (42,44), the outer lobes (44) protruding radially outwardly into the bypass passage (24) and the inner lobes (42) protruding radially inwardly into the core flow passage (26), and a plurality of struts (50) extending transversally between circumferentially adjacent inner lobes (42) in the core flow passage (26) at an axial location upstream from the downstream end (38) of the mixer (32), the struts (50) being positioned radially outwardly relative to a tip of said inner lobes (42), each of the struts (50) having a flow surface extending from a leading edge (52) to a trailing edge (54), the flow surface diverging radially outwardly from the axis (30) of the engine (10) in a downstream direction.

2. The exhaust mixer defined in claim 1, wherein each of the struts (50) is oriented at an angle (α) to the axis of the engine, the trailing edge (54) of each strut (50) being disposed radially outwardly relative to its leading edge (52).

3. The exhaust mixer defined in claim 1 or 2, wherein the flow surface extends generally along a straight line between the leading edge (52) and the trailing edge (54).

4. An exhaust mixer (32) for a gas turbine engine of the type having an annular core flow passage (26) for channelling a core flow along an axis of the engine, and a bypass passage (24) extending concentrically about the core flow passage for axially channelling bypass air; the exhaust mixer (32) comprising: an annular wall (34) concentrically disposed relative to the axis of the engine and extending axially between an upstream end (36) and a downstream end (38), the annular wall (34) defining a plurality of circumferentially distributed alternating inner and outer lobes (42,44), the outer lobes (44) protruding radially outwardly into the bypass passage (24) and the inner lobes (42) protruding radially inwardly into the core flow passage (26), the outer lobes (44) forming radially outwardly extending troughs between circumferentially adjacent inner lobes (42) in the core flow passage (26), and at least one circumferential array of struts (50), each of the troughs having at least one of said struts (50) disposed therein, the struts (50) interconnecting circumferentially adjacent inner lobes (42) at an axial location upstream from the downstream end (38) of the mixer (32), each of the struts (50) being configured to divert a portion of the core flow radially outwardly in the troughs between adjacent inner lobes (42).

5. The exhaust mixer defined in any preceding claim, wherein the struts (50) are generally disposed in the radially outer half of troughs formed by the outer lobes (44) between the inner lobes (42) on a core flow side of the mixer (32).

6. The exhaust mixer defined in any preceding claim, wherein the struts (50) are spaced axially upstream of the downstream end (38) of the annular wall (34) of the exhaust mixer (32).

7. The exhaust mixer defined in claim 1, 2, 3, 5 or 6, wherein said plurality of struts (50) includes at least two circumferential arrays of struts, said at least two circumferential arrays of struts including a radially outer array of struts (50b) and a radially inner array of struts (50a), the radially inner and radially outer arrays of struts (50) being concentric.

8. The exhaust mixer defined in claim 7, wherein the struts (50) of the radially inner and outer arrays define a core flow passage therebetween, the core flow passage diverging radially outwardly in a downstream direction of the core flow.

9. The exhaust mixer defined in claim 7 or 8, wherein the leading edges (52b) of the struts (50b) of the radially outer array is disposed upstream of the leading edges (52a) of the struts (50a) of the radially inner array of struts.

10. The exhaust mixer defined in claim 7, 8 or 9, wherein the trailing edges (54b) of the struts (50b) of the radially outer array project downstream of the trailing edges (54a) of the struts (50a) of the radially inner array in the core flow passage (26).

11. The exhaust mixer defined in any of claims 7 to 10, wherein both the radially inner and radially outer arrays of struts (50) are disposed in the radially outer half of troughs formed by the outer lobes (44) between the inner lobes (42) on a core flow side of the mixer.

12. The exhaust mixer defined in claim 4, 5 or 6, wherein each strut (50) has opposed flow surfaces extending from a leading edge (52) to a trailing edge (54), and wherein each strut (50) is oriented such that its trailing edge (54) is disposed radially outwardly relative to its leading edge (52).

13. The exhaust mixer defined in any of claims 4 to 6 or 12, wherein each strut (50) is oriented at an angle relative to the axis of the engine for diverting the core flow radially outwardly into the troughs.

14. The exhaust mixer defined in any of claims 13, 2, or in any of claims 3 or 5 to 11 as dependent upon claim 2, wherein the angle ranges from about 7 degrees to about 14 degrees.

15. The exhaust mixer defined in claim 4 to 6 or 12 to 14, wherein the at least one circumferential array of struts (50) includes radially inner and outer arrays, the struts of the radially outer arrays projecting upstream of the struts of the radially inner array in the core flow passage.

16. The exhaust mixer defined in claim 15 or claims 7 to 11, wherein the struts (50b) of the radially outer array are set at a greater angle from the axis of the mixer than the struts (50a) of the radially inner array.

17. The exhaust mixer defined in claim 15 or 16, wherein the struts (50) have opposed leading and trailing edges (52,54), wherein the trailing edges (54b) of the struts (50b) of the radially outer array extends downstream of the trailing edges (54a) of the struts (50a) of the radially inner array.
